## Europäisches Patentamt
## European Patent Office
## Office européen des brevets

(19)

(11) Veröffentlichungsnummer: **0 156 291**
**B1**

(12)

# EUROPÄISCHE PATENTSCHRIFT

(45) Veröffentlichungstag der Patentschrift:
10.08.88

(51) Int. Cl.⁴: **H 01 J 5/54,** H 01 J 61/72

(21) Anmeldenummer: **85103175.7**

(22) Anmeldetag: **19.03.85**

(54) **Kompakte Leuchtstofflampe.**

(30) Priorität: **23.03.84 DE 3410827**

(43) Veröffentlichungstag der Anmeldung:
**02.10.85 Patentblatt 85/40**

(45) Bekanntmachung des Hinweises auf die Patenterteilung:
**10.08.88 Patentblatt 88/32**

(84) Benannte Vertragsstaaten:
**DE FR GB IT SE**

(56) Entgegenhaltungen:
FR-A-838 557
GB-A-607 471
GB-A-2 077 488

(73) Patentinhaber: **Patent- Treuhand- Gesellschaft für elektrische Glühlampen mbH, Hellabrunner Strasse 1, D-8000 München 90 (DE)**

(72) Erfinder: **Wittmann, Horst, Dipl.- Ing. (FH), Ahornweg 22, D-8901 Stadtbergen (DE)**

## Beschreibung

Die Erfindung betrifft eine kompakte Leuchtstofflampe mit einem einseitig gesockelten Entladungsgefäß, bei der der Sockel ein mit den elektrischen Anschlußelementen versehenes Sockelunterteil aus einem isolierenden Material mit einer oberen Öffnung sowie eine das Ende des Entladungsgefäßes umgebende und die Öffnung des Sockelunterteils verschließende Sockelabdeckung aufweist und Mittel zur Verbindung der Sockelabdeckung mit dem Sockelunterteil vorgesehen sind.

Eine derartige Leuchtstofflampe ist aus der GB-A-2 077 488 bekannt

In einer speziellen Ausführungsform der Lampe gemäß vorliegender Erfindung weist das Entladungsgefäß zwei parallel zueinander verlaufende Schenkel auf, die im oberen Bereich miteinander verbunden sind, wie solches auch im Stand der Technik an sich bekannt ist. In einer Weiterbildung dieses Gegenstandes sind zwei solcher Entladungsgefäße im unteren Bereich durch einen von der Entladung durchströmten Steg verbunden, wobei in diesem Fall die Elektroden jeweils nur an den Endpunkten der Entladungsstrecke angeordnet sind. Die Enden jedes Schenkels münden in einen Sockel, der auch einen Starter beinhaltet.

Aus der oben genannten GB-A-2 077 488 ist bekannt, daß der im Spritzgußverfahren hergestellte Sockelunterteil aus Kunststoff besteht. Die obere Öffnung des Sockelunterteils nimmt die Schenkelenden des Entladungsgefäßes auf. Der verbleibende, noch freie Teil der Öffnung des Sockelunterteils ist mit einer die Schenkel umgebenden und aus Aluminium bestehenden Sockelabdeckung versehen, wobei zur Befestigung dieser beiden Teile miteinander die verformbare Sockelabdeckung am unteren Rand in entsprechende Vertiefungen des Sockelunterteils gedrückt ist. Die Befestigung des Entladungsgefäßes innerhalb des Sockels erfolgt mittels Kitt, der durch Temperaturanwendung aushärtet.

Die in der GB-A-2 077 488 beschriebene Sockelkonstruktion sowie das Montageverfahren hat verschiedene Nachteile. Bei Montagefehlern können spannungsführende Teile der Stromzuführungen mit der Sockelabdeckung aus Aluminium Kontakt erhalten, wodurch ein erhebliches Sicherheitsrisiko entsteht. Auch kann es bei zu geringem Abstand zwischen den spannungsführenden Stromzuführungen und der metallischen Sockelhülse zu Überschlägen kommen. Außerdem sind zur Befestigung der Sockelteile miteinander formverändernde Arbeitsgänge mit entsprechenden Werkzeugen an der Sockelabdeckung erforderlich.

Aufgabe vorliegender Erfindung ist es, eine Sockelkonstruktion zu schaffen, die maschinell leicht, schnell und kostengünstig zu montieren ist und insbesondere hinsichtlich der elektrischen Sicherheit mögliche Fehlerquellen und damit auch Unfallgefahren für den Anwender ausschließt.

Die kompakte Leuchtstofflampe mit den im Oberbegriff des Hauptanspruchs genannten Merkmalen ist dadurch gekennzeichnet, daß die Sockelabdeckung ebenfalls aus einem isolierenden Material besteht und mit mehreren Rastelementen versehen ist, die mit entsprechenden Paßelementen des Sockelunterteils zusammenwirken, wodurch eine formschlüssige Verbindung zwischen der Sockelabdeckung und dem Sockelunterteil gegeben ist. In einer Weiterbildung des Gegenstandes der Erfindung ist die Sockelabdeckung in einen Adapterteil und eine Deckkappe aufgeteilt. Die Deckkappe weist hierbei einen von der zu verschließenden Öffnung des Sockelunterteils abweichenden Querschnitt auf und das Adapterteil ist zur Anpassung dieser unterschiedlichen Querschnitte vorgesehen. Ein solcher Fall liegt zum Beispiel vor, wenn an Stelle von zwei Entladungsgefäßschenkeln vier in etwa einem Quadrat angeordnete Schenkel in dem Sockel enden. Der Querschnitt der Sockelabdeckung verdoppelt sich hierbei nahezu, während das in die Fassung einzusetzende Sockelunterteil Normmaßen unterliegt und somit gleich groß bleibt. Ein anderer Fall einer erforderlichen Querschnittsvergrößerung ist z. B. gegeben, wenn in der Sockelabdeckung auch ein Vorschaltgerät untergebracht ist. Die Verbindung zwischen der Deckkappe und dem Adapterteil erfolgt zweckmäßig ebenfalls mittels an die Deckkappe angeformter Rastelemente, die mit entsprechenden Paßelementen des Adapterteils zusammenwirken. Die Rastelemente sind zweckmäßig als Rastnasen und die Paßelemente als Vertiefungen ausgebildet. Hierdurch kann das herkömmliche Sockelunterteil ohne Veränderungen verwendet werden.

Ein derartiger Sockel für eine kompakte Leuchtstofflampe besteht für ein zweischenkliges Entladungsgefäß aus einem Sockelunterteil und einer Sockelabdeckung, die mittels einer einfachen Rastverbindung aneinander befestigt sind. Ein Entladungsgefäß mit mehr als zwei Schenkeln erfordert eine entsprechend vergrößerte Sockelabdeckung. Hierfür ist diese in eine an die entsprechende Schenkelanzahl angepaßte Deckkappe und ein Adapterteil aufgeteilt. Der obere Teil des Adapterteils ist dem Querschnitt der Deckkappe und der untere Teil des Adapterteils dem des Sockelunterteils angepaßt. Die zu verbindenden Teile sind zur Montageerleichterung an den sich berührenden Stellen mit mehreren ineinandergreifenden Verriegelungselementen versehen. Ein weiterer Vorteil dieser Konstruktion besteht darin, daß bei unterschiedlichen Sockelabdeckungen (Deckkappe plus zugehörigem Adapterteil) jeweils das gleiche Sockelunterteil verwendet werden kann. Hierdurch ergibt sich eine universelle Einsatzmöglichkeit der Einzelteile.

Auch werden auf diese Weise die Werkzeugkosten für den gesamten Sockel niedrig gehalten.

Sämtliche Einzelteile sind im Spritzgußverfahren aus Kunststoff einfach und billig hergestellt. Die Verbindung dieser Einzelteile erfolgt mittels der angespritzten Rastnasen und Vertiefungen schnell, einfach und kostengünstig. Es werden keine zusätzlichen formverändernden Werkzeuge mehr benötigt, sondern die Montage der Teile kann durch Ausüben eines geringen axialen Drucks auf mechanisierten Fertigungslinien erfolgen. Die Verwendung von Kunststoff bietet einen sicheren Berührungsschutz (Schutzklasse II) und entspricht somit den Bestimmungen nach VDE und IEC.

Die Erfindung wird nachfolgend anhand der Figuren näher erläutert:

Figur 1  zeigt den Sockelaufbau einer zweischenkligen einseitig gesockelten Leuchtstofflampe
Figur 2  zeigt die Draufsicht der Figur 1 ohne das Entladungsgefäß
Figur 3  zeigt die Verbindung zwischen dem Sockelunterteil und der Sockelabdeckung der Figur 1
Figur 4  zeigt den Sockelaufbau einer vierschenkligen einseitig gesockelten Leuchtstofflampe
Figur 5  zeigt die Seitenansicht der Figur 4
Figur 6  zeigt die Draufsicht der Figur 4
Figur 7  zeigt die Verbindung zwischen dem Sockelunterteil und der Sockelabdeckung der Figur 4

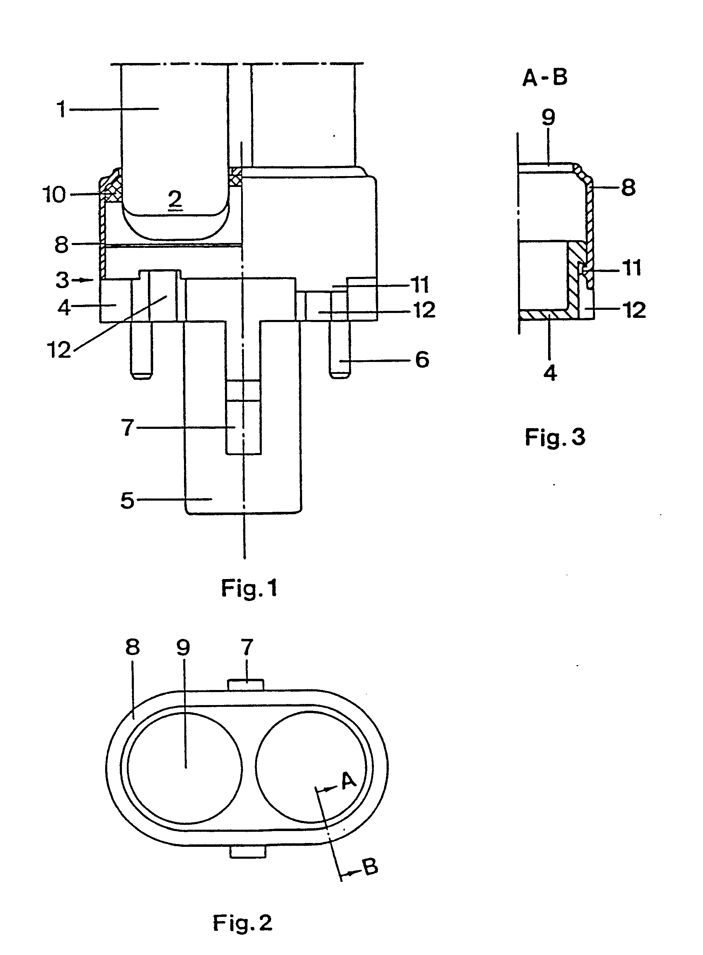

Die Figuren 1 bis 3 zeigen eine kompakte Leuchtstofflampe mit einem abgeschnittenen Entladungsgefäß 1, das aus einem etwa U-förmig gebogenen Glasrohr besteht, dessen zwei benachbarte Enden 2 mittels einer Quetschung abgedichtet sind und in einem Sockel 3 enden. Der Sockel 3 weist ein Sockelunterteil 4 auf, an den ein Führungszapfen 5 angeformt ist und an dem zwei Anschlußstifte 6 befestigt sind. Der Führungszapfen 5 nimmt einen Starten (nicht dargestellt) auf und ist zur Verriegelung in einer Fassung mit Nocken 7 versehen. Des weiteren enthält der Sockel eine Sockelabdeckung 8 mit zwei Öffnungen 9, durch die die beiden Enden 2 des Entlsdungsgefäßes 1 in das Innere des Sockels 3 geführt sind. Das Entladungsgefäß 1 ist an seinen Enden 2 mittels Kitt 10 an der Sockelabdeckung 8 befestigt. Die Sockelabdeckung 8 ist mit dem Sockelunterteil 4 mittels einer Schnappverbindung fest verbunden. Hierfür weist die Sockelabdeckung 8 mehrere am inneren Umfang verteilte Rastnasen 11 auf, die in entsprechende, am herkömmlichen Sockelunterteil 4 bereits vorhandene Vertiefungen 12 einrasten. In die Vertiefungen 12 wird bei herkömmlichen Sockeln dieser Art die aus Aluminium bestehende obere Sockelabdeckung eingedrückt.

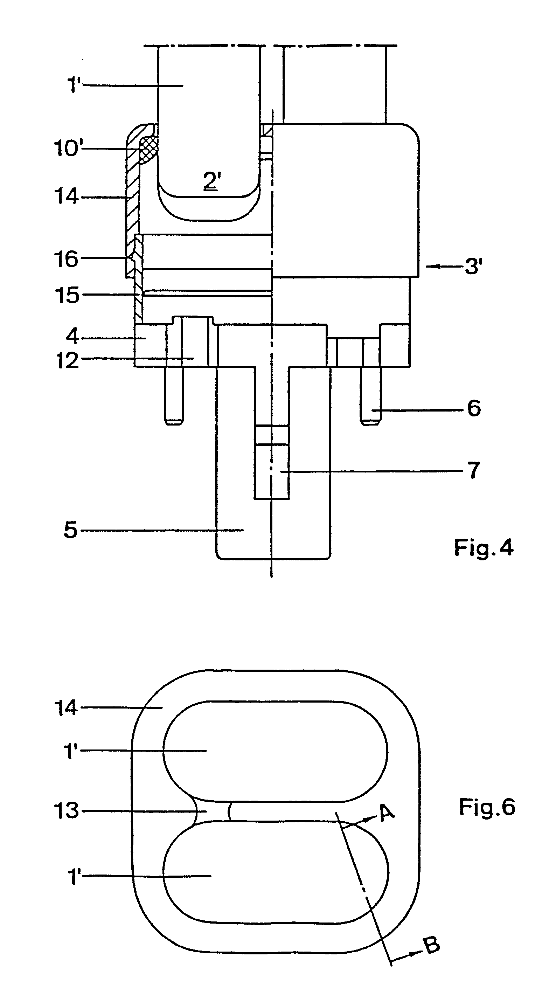

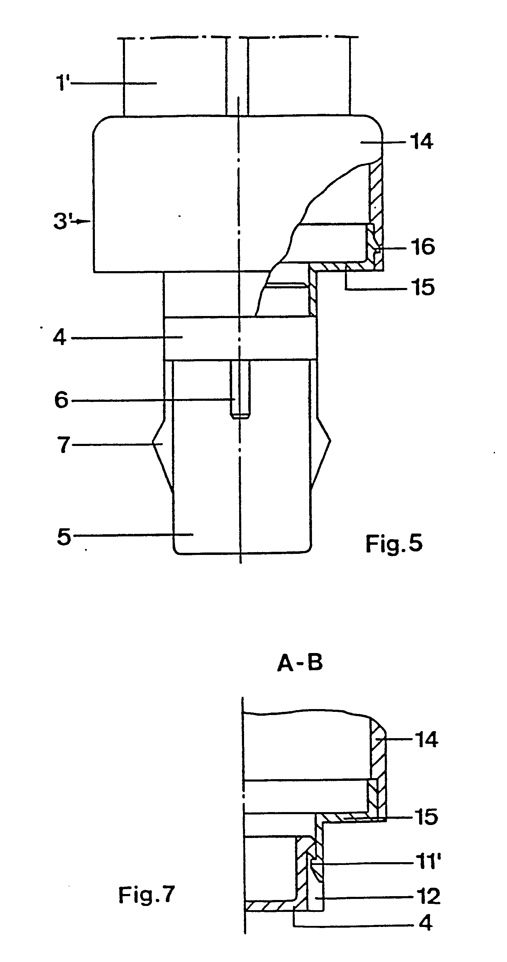

Ein weiteres Ausführungsbeispiel ist in den Figuren 4 bis 7 dargestellt. Das Entladungsgefäß 1' besteht hierbei aus zwei gleichartigen, miteinander mittels eines Verbindungssteges 13 verbundenen, etwa U-förmig gebogenen Glasrohren, deren vier benachbarte Enden 2' wie im vorangegangenen Beispiel mittels einer Quetschung abgedichtet sind und in einem Sockel 3' münden. In diesem Fall ist jedoch nur der Anfangs- und Endpunkt der Entladungsstrecke mit einer Elektrode versehen. Das Sockelunterteil 4 ist mit dem aus den Figuren 1 bis 3 identisch. Im Gegensatz dazu ist die Sockelabdeckung hier jedoch in eine Deckkappe 14 und ein Adapterteil 15 aufgeteilt. Um die vier benachbarten Enden 2' des Entladungsgefäßes 1' im Sockel 3' unterbringen zu können, muß die Sockelabdeckung einen entsprechend vergrößerten Querschnitt aufweisen. Die Deckkappe 14 weist deshalb einen etwa quadratischen Querschnitt auf, bei dem die Ecken abgerundet sind (Figur 6). Das Adapterteil 15 hat die Aufgabe, diese unterschiedlichen Querschnitte des Sockelunterteils 4 (Figur 2) und der Deckkappe 14 (Figur 6) aneinander anzugleichen und weist deshalb einen sich nach oben erweiternden Querschnitt auf. Das Adapterteil 15 ist wie im vorherigen Ausführungsbeispiel mittels einer Schnappverbindung (11', 12) an dem Sockelunterteil 4 befestigt. Auf die gleiche Weise ist auch die Verbindung zwischen der Deckkappe 14 und dem Adapterteil 15 an der Stelle 16 vorgenommen, wobei mehrere am inneren Umfang des Adapterteiles 15 verteilte Rastnasen in die an der Deckkappe 14 vorhandenen Vertiefungen einrasten. Das Entladungsgefäß 1' ist an seinen Enden 2', ähnlich wie im Ausführungsbeispiel des zweischenkligen Entladungsgefäßes 1 (Figur 1), mittels Kitt 10' an der Deckkappe 14 befestigt.

**Patentansprüche**

1. Kompakte Leuchtstofflampe mit einem einseitig gesockelten Entladungsgefäß (1, 1'), bei der der Sockel (3, 3') ein mit den elektrischen Anschlußelementen (6) versehenes Sockelunterteil (4) aus einem isolierenden Material mit einer oberen Öffnung sowie eine das Ende (2, 2') des Entladungsgefäßes (1, 1') umgebende und die Öffnung des Sockelunterteils (4) verschließende Sockelabdeckung (8; 14, 15) aufweist und Mittel (11, 12; 11', 12) zur Verbindung der Sockelabdeckung (8; 14, 15) mit dem Sockelunterteil (4) vorgesehen sind, dadurch gekennzeichnet, daß die Sockelabdeckung (8; 14, 15) ebenfalls aus einem isolierenden Material besteht und mit mehreren Rastelementen (11; 11') versehen ist, die mit entsprechenden Paßelementen (12) des Sockelunterteils (4) zusammenwirken, wodurch eine formschlüssige Verbindung zwischen der Sockelabdeckung (8; 14, 15) und dem Sockelunterteil (4) gegeben ist.

2. Kompakte Leuchtstofflampe nach Anspruch 1, dadurch gekennzeichnet, daß die Sockelabdeckung (8; 14, 15) aus einem Adapterteil (15) und einer Deckkappe (14) besteht, wobei die Deckkappe (14) einen von der zu verschließenden Öffnung des Sockelunterteils (4) abweichenden Querschnitt aufweist und das Adapterteil (15) zur Anpassung dieser unterschiedlichen Querschnitte vorgesehen ist.

3. Kompakte Leuchtstofflampe nach Anspruch 2, dadurch gekennzeichnet, daß die Deckkappe (14) mit mehreren Rastelementen (16) versehen ist, die mit entsprechenden Paßelementen des Adapterteils (15) zusammenwirken, wodurch eine formschlüssige Verbindung zwischen der Deckkappe (14) und dem Adapterteil (15) gegeben ist.

4. Kompakte Leuchtstofflampe nach Anspruch 1 bis 3, dadurch gekennzeichnet, daß die Rastelemente als Nasen (11; 16) und die Paßelemente als Vertiefungen (12) ausgebildet sind.

**Claims**

1. A compact fluorescent lamp with a discharge vessel (1, 1') having a base at one end, wherein the base (3, 3') has a bottom part (4) equipped with the electrical terminal elements (6) and made of an insulating material, with an upper aperture, and a base cover (8; 14, 15) surrounding the end (2, 2') of the discharge vessel (1, 1') and closing the aperture in the bottom part (4) of the base, means (11, 12; 11', 12') being provided for connecting the base cover (8; 14, 15) to the bottom part (4) of the base, characterised in that the base cover (8; 14, 15) also consists of an insulating material and is provided with several catch elements (11; 11') which cooperate with corresponding mating elements (12) of the bottom part (4) of the base, thereby ensuring a positive connection between the base cover (8; 14, 15) and the bottom part (4) of the base.

2. A compact fluorescent lamp according to Claim 1, characterised in that the base cover (8; 14, 15) consists of an adaptor part (15) and a hood (14), the hood (14) having a cross-section differing from that of the aperture to be closed in the bottom part (4) of the base, and the adaptor part (15) being provided for matching these different cross-sections.

3. A compact fluorescent lamp according to Claim 2, characterised in that the hood (14) is provided with several catch elements (16) which co-operate with corresponding mating elements of the adaptor part (15), thereby ensuring a positive connection between the hood (14) and the adaptor part (15).

4. A compact fluorescent lamp according to Claims 1 to 3, characterised in that the catch elements are in the form of noses (11; 16) and the mating elements are recesses (12).

**Revendications**

1. Lampe fluorescente compacte comportant une enceinte à décharge (1, 1') à culot unilatéral, dans laquelle le culot (3, 3') présente une partie inférieure du culot (4), en un matériau isolant, pourvue d'éléments de raccordement électrique (6) et comportant une ouverture supérieure ainsi qu'un couvercle du culot (8 ; 14, 15) entourant l'extrémité (2, 2') de l'enceinte à décharge (1, 1') et obturant l'ouverture de la partie inférieure du culot (4), et dans laquelle sont prévus des moyens (11, 12; 11', 12') pour assembler le couvercle du culot (8; 14, 15) à la partie inférieure du culot (4), caractérisée en ce que le couvercle du culot (8; 14, 15) est constitué également en un matériau isolant et est pourvu de plusieurs éléments d'encliquetage (11; 11'), qui coagissent avec des éléments ajustés (12) correspondants de la partie supérieure du culot (4), de sorte à réaliser une liaison par formes complémentaires entre le couvercle du culot (8; 14, 15) et la partie inférieure du culot (4).

2. Lampe fluorescente compacte selon la revendication 1, caractérisée en ce que le couvercle du culot (8; 14, 15) se compose d'un élément d'adaptation (15) et d'un capuchon (14), le capuchon (14) présentant une section différente de l'ouverture de la partie inférieure du culot (4) qui doit être obturée, et l'élément d'adaptation (15) étant prévu pour adapter ces sections différentes.

3. Lampe fluorescente compacte selon la revendication 2, caractérisée en ce que le capuchon (14) est pourvu de plusieurs éléments d'encliquetage (16) qui coagissent avec les éléments ajustés correspondants de l'élément d'adaptation (15), de sorte à réaliser une liaison par formes complémentaires entre le capuchon (14) et l'élément d'adaptation (15).

4. Lampe fluorescente compacte selon la revendication 1 à 3, caractérisée en ce que les éléments d'encliquetage sont réalisés sous forme de becs (11; 16) et les éléments ajustés sont réalisés sous forme de cavités (12).

**A - B**

**Fig. 3**

**Fig. 1**

**Fig. 2**

1'

10'

14

2'

16

15

3'

4

12

6

7

5

**Fig. 4**

14

1'

13

1'

A

B

**Fig. 6**

Fig.5

A-B

Fig.7